# EUROPEAN PATENT APPLICATION

(11) **EP 4 701 046 A1**
(43) Date of publication of application: **25.02.2026**
(21) Application number: 24818990.4
(22) Date of filing: 12.03.2024
(51) Int. Cl.: H02K 1/2733

(54) **ROTATING ELECTRICAL MACHINE AND PUMP DEVICE**

(30) Priority: 05.06.2023 JP 2023092646
(71) Applicant: Nikkiso Co., Ltd., Tokyo 150-6022 (JP)
(72) Inventor: KOMORI, Chihiro, Higashimurayama-shi, Tokyo 189-8520 (JP)
(74) Representative: Mathys & Squire
(86) International application number: PCT/JP2024/009473
(87) International publication number: WO 2024/252751

(57) **Abstract**

Provided are a rotating electric machine and a pump device that include a rotor having the SPM structure suitable for high-speed rotation. The rotating electric machine (3 to 3E) includes the rotor (R to RE) and a rotary shaft (7) to which rotation of the rotor is transmitted. The rotor or the rotary shaft includes a core portion (71) having a solid cylindrical outer circumferential surface. The rotor includes a plurality of magnets (81 to 88) fixed to the core portion and a resin material (12) that fixes the plurality of magnets to the core portion. Each magnet has a seamless annular shape. Each of the plurality of magnets is disposed outside the core portion in a radial direction of the core portion and is disposed along an axial direction of the core portion, and the resin material is filled into gaps between the core portion and the magnets.

## Description

### [Technical Field]

The present invention relates to a rotating electric machine and a pumping device.

### [Background Art]

A wet motor pump is used as one type of sealless motor pump in which a rotating electric machine and a pump are integrally formed and leakage of pumped liquid is prevented. The rotating electric machine includes a rotary shaft, a rotor mounted on the rotary shaft, and a stator. In the wet motor pump, the rotor and the stator are in contact with the pumped liquid.

The structure of the rotor included in the rotating electric machine is roughly classified into a surface permanent magnet (SPM) structure in which magnets are mounted on an outer circumferential surface of a rotor core and an interior permanent magnet (IPM) structure in which magnets are embedded in a rotor core.

In a rotor having the SPM structure, the magnets are not embedded in the rotor core. Thus, the outer diameter of the rotor (hereinafter referred to as "rotor diameter") having the SPM structure can be made smaller than that of a rotor having the IPM structure. However, in the rotor having the SPM structure, the magnets are mounted on the outer circumferential surface of the rotor core, and thus, when the rotational speed of the rotor increases, the detachment of the magnets may occur due to the centrifugal force accompanying the rotation of the rotor. Thus, in the rotor having the SPM structure, a hollow cylindrical sleeve is mounted on outer circumferential surfaces of the magnets to prevent the detachment of the magnets. In this case, the sleeve needs to have a thickness sufficient to resist the detachment of the magnets, and the rotor diameter increases. However, as the rotor diameter increases, the energy loss (so-called fluid loss) due to the resistance (friction) of the pumped liquid in contact with the rotor increases. Accordingly, the rotor having the SPM structure is not suitable for high-speed rotation.

A method has been proposed to enhance the strength of the magnet in the rotor having the SPM structure by using a seamless cylindrical magnet (for example, see JP2022-149226A).

### [Citation List]

### [Patent Literature]

[PTL 1] JP2022-149226 A

### [Summary of Invention]

### [Technical Problem]

However, in order to mount the hollow cylindrical magnet on the outer circumferential surface of the rotor core, the rotor core needs to be press-fitted into the magnet. For this purpose, a magnet manufactured with high dimensional accuracy is required. However, magnets are generally manufactured by sintering, and thus it is difficult to manufacture magnets with the dimensional accuracy required for press fitting, and it is also difficult to process the magnets by cutting. In order to obtain the output required for high-speed rotation, the rotor core becomes thinner and longer, and the manufacture of the hollow cylindrical magnet corresponding to the rotor core becomes more difficult. Accordingly, it is difficult to achieve a rotor having the SPM structure suitable for high-speed rotation.

The present invention is directed to providing a rotating electric machine and a pump device that include a rotor having the SPM structure suitable for high-speed rotation.

### [Solution to Problem]

A rotating electric machine according to one aspect of the present invention includes a rotor and a rotary shaft to which rotation of the rotor is transmitted, in which the rotor or the rotary shaft includes a core portion having a solid cylindrical outer circumferential surface, the rotor includes a plurality of magnets fixed to the core portion and a first resin material that fixes the plurality of magnets to the core portion, in which each of the plurality of magnets has a seamless annular shape, each of the plurality of magnets is disposed outside the core portion in a radial direction of the core portion and is disposed along an axial direction of the core portion, and the first resin material is filled into gaps between the core portion and the plurality of magnets.

A pump device according to one aspect of the present invention includes the rotating electric machine according to the above aspect and an impeller that rotates by the rotation of the rotating electric machine.

### [Advantageous Effects of Invention]

The present invention is capable of providing the rotating electric machine and the pump device that include the rotor having the SPM structure suitable for high-speed rotation.

### [Brief Description of Drawings]

[Fig. 1] Fig. 1 is a schematic longitudinal sectional view of a pump device illustrating an embodiment of the pump device according to the present invention.
[Fig. 2] Fig. 2 is a partial schematic longitudinal sectional view of a rotating electric machine illustrating an embodiment of the rotating electric machine according to the present invention, the rotating electric machine being included in the pump device in Fig. 1.
[Fig. 3] Fig. 3 is a schematic cross-sectional view of the rotor included in the rotating electric machine in Fig. 2, taken along the line A-A in Fig. 2.
[Fig. 4] Fig. 4 is an enlarged partial schematic longitudinal sectional view of the rotor included in the rotating electric machine in Fig. 2.
[Fig. 5] Fig. 5 is a schematic cross-sectional view of the rotor included in the rotating electric machine in Fig. 2, taken along the line B-B in Fig. 2.
[Fig. 6] Fig. 6 is an exploded schematic longitudinal sectional view of the rotor included in the rotating electric machine in Fig. 2.
[Fig. 7] Fig. 7 is a partial schematic longitudinal sectional view of a rotating electric machine illustrating a second embodiment of the rotating electric machine according to the present invention.
[Fig. 8] Fig. 8 is a schematic cross-sectional view of the rotor included in the rotating electric machine in Fig. 7, taken along the line C-C in Fig. 7.
[Fig. 9] Fig. 9 is a partial schematic longitudinal sectional view of a rotating electric machine illustrating a third embodiment of the rotating electric machine according to the present invention.
[Fig. 10] Fig. 10 is a schematic cross-sectional view of the rotor included in the rotating electric machine in Fig. 9, taken along the line D-D in Fig. 9.
[Fig. 11] Fig. 11 is a partial schematic longitudinal sectional view of a rotating electric machine illustrating a fourth embodiment of the rotating electric machine according to the present invention.
[Fig. 12] Fig. 12 is an enlarged partial schematic longitudinal sectional view of the rotating electric machine in Fig. 11.

### [Description of Embodiments]

Embodiments of a pump device and a rotating electric machine according to the present invention will be described below. In the following description, each drawing is referred to as appropriate. In the drawings, the same members and components are indicated with the same reference signs, and repetitive description thereof will be omitted. Further, the dimensional ratios of the components may be exaggerated for convenience of description and are not limited to the ratios illustrated in the drawings.

In the following description, a wet motor pump in which a pump unit and a motor unit are integrally formed (hereinafter simply referred to as a "pump") is described as an example of the pump device according to the present invention. The pump is a sealless motor pump having a structure in which pumped liquid does not leak, and has a structure in which the entire pump is submerged in the pumped liquid and a portion of the pumped liquid is also introduced into the motor unit.

### Pump Device (1)

### Configuration of Pump Device (1)

First, an embodiment of the pump device according to the present invention (hereinafter simply referred to as "pump device") will be described below.

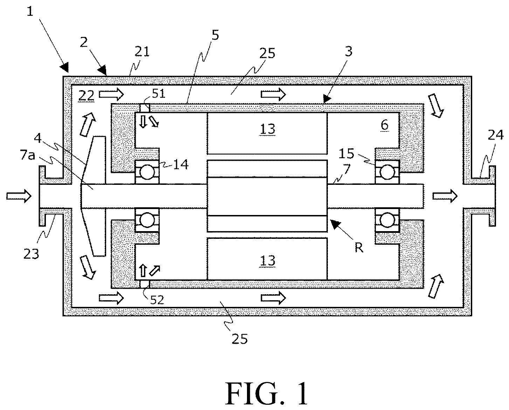

Fig. 1 is a schematic longitudinal sectional view of the pump device illustrating an embodiment of the pump device. The figure illustrates the flow of pumped liquid with a hollow arrow. The figure illustrates the pump device 1 in a simplified manner for convenience of description.

The pump device 1 is used for delivering pumped liquid (e.g., water). The pump device 1 includes a pump unit 2, a motor unit 3, and an impeller 4.

In the following description, a "front direction" is a direction in which the impeller 4 is positioned relative to the motor unit 3, and a "rear direction" is a direction opposite to the front direction.

The pump unit 2 sucks in and discharges the pumped liquid. The pump unit 2 includes a housing 21, a pump chamber 22, a suction pipe 23, a discharge pipe 24, and an internal flow path 25.

The housing 21 accommodates the motor unit 3 and defines the pump chamber 22 in which the impeller 4 is accommodated and the internal flow path 25. The housing 21 is made of, for example, stainless steel. A front end portion of the housing 21 extends cylindrically toward the front direction and forms the suction pipe 23. A rear end portion of the housing 21 extends cylindrically toward the rear direction and forms the discharge pipe 24. The internal flow path 25 is defined between the housing 21 and the motor unit 3 (i.e., a housing 5 to be described later) along the front-rear direction. The internal flow path 25 communicates with the pump chamber 22 and the discharge pipe 24. That is, the housing 21 includes the pump chamber 22, the suction pipe 23, the discharge pipe 24, and the internal flow path 25.

The suction pipe 23 is a flow path for the pumped liquid to be sucked into the pump chamber 22.

The discharge pipe 24 is a flow path for the pumped liquid to be discharged from the pump chamber 22.

The internal flow path 25 is a flow path through which the pumped liquid sucked in through the suction pipe 23 into the pump chamber 22 is guided to the discharge pipe 24.

The motor unit 3 is driven under a predetermined driving condition and rotates the impeller 4 in the pump chamber 22. The motor unit 3 is accommodated in the housing 21. The motor unit 3 is an example of the rotating electric motor according to the present invention. A specific configuration of the motor unit 3 will be described later.

The impeller 4 is mounted to a front end portion of a rotary shaft 7 described later and rotates as the rotary shaft 7 rotates. That is, the impeller 4 rotates by the rotation of the motor unit 3. The impeller 4 rotates and thus discharges the pumped liquid, which has been sucked into the pump chamber 22 through the suction pipe 23, through the internal flow path 25 and the discharge pipe 24.

### Motor Unit (1)

### Configuration of Motor Unit (1)

Next, the configuration of the motor unit 3 will be described below.

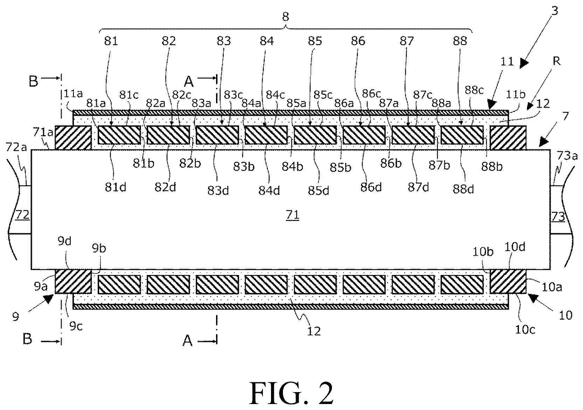

Fig. 2 is a partial schematic longitudinal sectional view of the motor unit 3 illustrating an embodiment of the motor unit 3. The figure illustrates the configuration of the motor unit 3 with a portion thereof omitted. The figure illustrates the rotary shaft 7 described later in a non-sectional view. The figure schematically illustrates a rotor R described later. In the following description, Fig. 1 is referred to as appropriate.

The motor unit 3 includes the housing 5, a motor chamber 6, the rotary shaft 7, a magnet unit 8, a pair of annular members 9 and 10, a sleeve 11, resin material 12, a stator 13, and bearings 14 and 15. A portion of the rotary shaft 7 (i.e., a large diameter portion 71 described later), the magnet unit 8, the pair of annular members 9 and 10, the sleeve 11, and the resin material 12 constitute the rotor R in the present invention. That is, the motor unit 3 includes the rotor R.

The housing 5 defines the motor chamber 6 that accommodates the rotary shaft 7, the magnet unit 8, the pair of annular members 9 and 10, the sleeve 11, the stator 13, and the bearings 14 and 15. The housing 5 is made of, for example, stainless steel. The housing 5 includes liquid introduction ports 51 and 52.

The liquid introduction ports 51 and 52 are holes penetrating the housing 5. Each of the liquid introduction ports 51 and 52 communicates with the internal flow path 25 and the motor chamber 6 and allows the pumped liquid to be introduced into the motor chamber 6. The liquid introduction ports 51 and 52 are disposed, for example, at the front portion of the housing 5.

Note that, in the present invention, the liquid introduction ports 51 and 52 may be disposed at the rear portion or the central portion of the housing 5.

In the present invention, the number of liquid introduction ports 51 and 52 may be any number that allows the pumped liquid to be introduced into the motor chamber 6 and is not limited to "two".

The rotary shaft 7 rotates by the rotation of the rotor R and transmits rotating power to the impeller 4. The rotary shaft 7 has a solid cylindrical shape. The rotary shaft 7 includes the large diameter portion 71, and small diameter portions 72 and 73 each having the outer diameter smaller than that of the large diameter portion 71.

In the following description, the "axial direction" refers to a direction along the central axis of the rotary shaft 7 (i.e., the front-rear direction), the "radial direction" refers to a direction along the radius of the rotary shaft 7, and the "circumferential direction" refers to a direction along the circumference of the rotary shaft 7. In the axial direction, a front end portion 7a of the rotary shaft 7 projects into the pump chamber 22.

In the axial direction, each of the large diameter portion 71 and the small diameter portions 72 and 73 has a solid cylindrical shape, and the large diameter portion 71 and the small diameter portions 72 and 73 have solid cylindrical outer circumferential surfaces 71a, 72a, and 73a, respectively. In the axial direction, the large diameter portion 71 is disposed at the center of the rotary shaft 7. The small diameter portion 72 is disposed in the front direction relative to the large diameter portion 71 and adjacent to the large diameter portion 71, and the small diameter portion 73 is disposed in the rear direction relative to the large diameter portion 71 and adjacent to the large diameter portion 71. That is, in the axial direction, the small diameter portions 72 and 73 are disposed on both sides of (outside) the large diameter portion 71 in such a way as to sandwich the large diameter portion 71. In other words, the large diameter portion 71 is positioned between the small diameter portions 72 and 73. In this way, the large diameter portion 71 and the small diameter portions 72 and 73 constitute one shaft body (i.e., the rotary shaft 7). When viewed in the axial direction, the large diameter portion 71 is disposed concentrically with the small diameter portions 72 and 73. That is, the central axis of the rotary shaft 7 coincides with the central axis of the large diameter portion 71 and the central axis of the small diameter portions 72 and 73. Herein, the large diameter portion 71 (i.e., a portion of the rotary shaft 7 sandwiched between the small diameter portions 72 and 73 in the axial direction) functions as a rotor core of the rotor R. In this way, the large diameter portion 71 functions as the rotor core, and thus the outer diameter of the rotor core (i.e., a rotor diameter described later) can be reduced to a size close to the outer diameter of the rotary shaft 7, compared with a case where the rotor core is mounted on the rotary shaft 7 (i.e., a case where the rotary shaft 7 and the rotor core are separate bodies). The large diameter portion 71 is one example of the core portion in the present invention. That is, the large diameter portion 71 functions as a core portion.

The magnet unit 8 is fixed to the large diameter portion 71 and rotates the rotary shaft 7 by a rotating magnetic field generated in the stator 13. The magnet unit 8 includes a plurality of magnets 81, 82, 83, 84, 85, 86, 87, and 88 (eight in the present embodiment). That is, the magnet unit 8 is an assembly of the plurality of magnets (the magnets 81 to 88). Each of the magnets 81 to 88 is a permanent magnet such as a neodymium magnet (a rare earth magnet), for example.

Note that, in the present invention, each of the magnets 81 to 88 may be any permanent magnet that can be used for the motor unit 3 and is not limited to a neodymium magnet. That is, for example, each of the magnets 81 to 88 may be a samarium-cobalt magnet or a ferrite magnet.

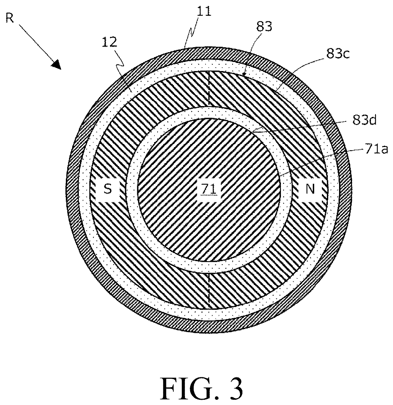

Fig. 3 is a schematic cross-sectional view of the rotor R, taken along the line A-A in Fig. 2. The figure illustrates a cross-section of the magnet 83 for convenience of description, and the cross-sectional shape of the magnet 83 is common to the cross-sectional shapes of the other magnets 81, 82, and 84 to 88. Accordingly, the configuration and the shape of the magnet 83 are common to the configurations and the shapes of the magnets 81, 82, and 84 to 88. For convenience of description, the figure illustrates, with dashed lines, a virtual boundary of a magnetic pole described later, since the actual boundary is not clearly defined. In the following description, Fig. 2 will be referred to as appropriate.

Each of the magnets 81 to 88 has a seamless annular shape. The inner diameter of each of the magnets 81 to 88 is larger than the outer diameter of the large diameter portion 71. The magnet 81 includes a front surface 81a, a rear surface 81b, an outer circumferential surface 81c, and an inner circumferential surface 81d. Similarly, each of the magnets 82 to 88 includes a respective front surface 82a, 83a, 84a, 85a, 86a, 87a, and 88a, a respective rear surface 82b, 83b, 84b, 85b, 86b, 87b, and 88b, a respective outer circumferential surface 82c, 83c, 84c, 85c, 86c, 87c, and 88c, and a respective inner circumferential surface 82d, 83d, 84d, 85d, 86d, 87d, and 88d. The front surfaces 81a to 88a are examples of a first surface according to the present invention, and the rear surfaces 81b to 88b are examples of a second surface according the present invention.

The large diameter portion 71 (the rotary shaft 7) is clearance-fitted into each of the magnets 81 to 88, and a gap into which the resin material 12 can penetrate is defined between each of the inner circumferential surfaces 81d to 88d and the outer circumferential surface 71a of the large diameter portion 71. That is, in the radial direction, each of the magnets 81 to 88 is disposed outside the large diameter portion 71. In the axial direction, the magnets 81 to 88 are disposed apart from one another (without abutting) along the axial direction.

In the circumferential direction, each of the magnets 81 to 88 has a plurality of magnetic poles that are alternately arranged (two poles of a south pole and a north pole in the present embodiment). In the circumferential direction, the positions of the magnetic poles of the magnets 81 to 88 are the same. That is, in the axial direction, the south pole of each of the magnets 81 to 88 faces the south pole of each of the adjacent magnets 81 to 88, and the north pole of each of the magnets 81 to 88 faces the north pole of each of the adjacent magnets 81 to 88.

Note that, the number of magnets included in the magnet unit 8 is not limited to "eight" in the present invention. That is, for example, the magnet unit 8 may include "two" to "seven", or "nine" or more magnets. Herein, in the axial direction, the length (thickness) of the magnet unit 8 and the number of magnets are appropriately set depending on the magnetic flux required to drive the motor unit 3. That is, for example, in the case where the motor unit 3 has the same specification, the length (thickness) of the magnet unit 8 is identical in the axial direction, and the length (thickness) of each magnet decreases as the number of magnets increases.

In the present invention, the number of magnetic poles of each of the magnets 81 to 88 may be an even number and is not limited to "two poles". That is, for example, the number of magnetic poles of each of the magnets 81 to 88 may be "four poles" or "six poles".

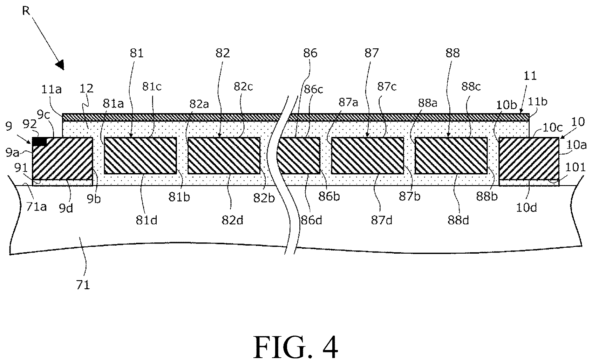

Fig. 4 is an enlarged partial schematic longitudinal sectional view of the rotor R. The figure illustrates the rotary shaft 7 in a non-sectional view. In the following description, Fig. 2 will be referred to as appropriate.

The annular members 9 and 10 function as a dummy weight that adjusts the rotational balance when the rotary shaft 7 rotates (i.e., the rotational balance of the rotary shaft 7). The annular members 9 and 10 are made of, for example, stainless steel. Each of the annular members 9 and 10 has an annular shape. The shape of the annular member 9 is the same as the shape of the annular member 10, except for the presence or absence of a processed region 92 described later. In the radial direction, the annular members 9 and 10 are mounted (fixed) to the outside of the large diameter portion 71. The outer diameter of each of the annular members 9 and 10 is substantially the same as the outer diameter of each of the magnets 81 to 88. The inner diameter of each of the annular members 9 and 10 is substantially the same as the outer diameter of the large diameter portion 71.

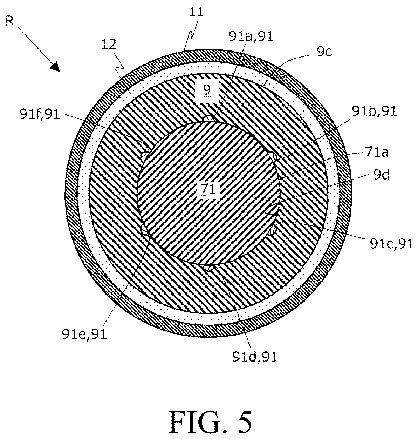

Fig. 5 is a schematic cross-sectional view of the rotor R, taken along the line B-B in Fig. 2. The figure illustrates a cross-section of the annular member 9 for convenience of description. In the following description, Figs. 2 and 4 will be referred to as appropriate.

The annular member 9 includes a plurality of (six in the present embodiment) groove portions 91a, 91b, 91c, 91d, 91e, and 91f, the processed region 92, a front surface 9a, a rear surface 9b, an outer circumferential surface 9c, and an inner circumferential surface 9d. The large diameter portion 71 is press-fitted into the annular member 9, and thus the annular member 9 is mounted on the outside of the large diameter portion 71 in the radial direction. That is, the inner circumferential surface 9d abuts the outer circumferential surface 71a of the large diameter portion 71. In the following description, when the groove portions 91a to 91f are not particularly distinguished from each other, each of the groove portions 91a to 91f is referred to as a "groove portion 91".

The groove portion 91 is a groove formed on the inner circumferential surface 9d along the axial direction (i.e., the front-rear direction). In the axial direction, the groove portion 91 communicates with the front side (one direction side) and the rear side (the other direction side) of the annular member 9. When viewed in the axial direction, the groove portion 91 has a substantially semicircular shape. In the circumferential direction, the groove portions 91a to 91f are disposed at equal intervals on the inner circumferential surface 9d. The groove portion 91 faces the outer circumferential surface 71a of the large diameter portion 71. As a result, the groove portion 91, together with the outer circumferential surface 71a, defines a hole through which the front side of the annular member 9 communicates with the rear side thereof. In other words, the groove portion 91 communicates with the front end side (the side of the front surface 9a) and the rear end side (the side of the rear surface 9b) of the annular member 9.

The following description mainly refers to Figs. 2 and 4. The processed region 92 is a region subjected to processing to adjust the rotational balance of the rotary shaft 7. The processing is performed, for example, by cutting a portion of the outer circumferential surface 9c at the front portion of the annular member 9. That is, the processed region 92 is a region formed by cutting a portion of the outer circumferential surface 9c of the annular member 9 in order to adjust the rotational balance of the rotary shaft 7. As illustrated in Fig. 4, in the present embodiment, only the annular member 9 is subjected to the above processing, and the annular member 10 is not subjected to the above processing. That is, in the present embodiment, only the annular member 9 of the pair of annular members 9 and 10 includes the processed region 92, and the annular member 10 does not include the processed region.

The annular member 10 includes a plurality of (six in the present embodiment) groove portions 101, a rear surface 10a, a front surface 10b, an outer circumferential surface 10c, and an inner circumferential surface 10d. The large diameter portion 71 is press-fitted into the annular member 10, and thus the annular member 10 is mounted on the outside of the large diameter portion 71 in the radial direction. That is, the inner circumferential surface 10d abuts the outer circumferential surface 71a of the large diameter portion 71.

The groove portion 101 is a groove formed on the inner circumferential surface 10d along the axial direction (i.e., the front-rear direction). In the axial direction, the groove portion 101 communicates with the front side (one direction side) and the rear side (the other direction side) of the annular member 10. When viewed in the axial direction, the groove portion 101 has a substantially semicircular shape (not illustrated). In the circumferential direction, the groove portions 101 are disposed at equal intervals on the inner circumferential surface 10d. The groove portion 101 faces the outer circumferential surface 71a of the large diameter portion 71. As a result, the groove portion 101, together with the outer circumferential surface 71a, defines a hole through which the side of the rear surface 10a of the annular member 10 communicates with the side of the front surface 10b thereof. In other words, the groove portion 101 communicates with the rear end side (the side of the rear surface 10a) and the front end side (the side of the front surface 10b) of the annular member 10.

The annular member 9 is disposed in the front direction of the magnet unit 8 (the magnet 81), and the annular member 10 is disposed in the rear direction of the magnet unit 8 (the magnet 88). That is, in the axial direction, the pair of annular members 9 and 10 is disposed in such a way as to sandwich the magnets 81 to 88. For example, the annular members 9 and 10 manufactured by metal cutting or the like are easier to process than the magnets 81 to 88 manufactured by sintering. Thus, the rotational balance of the rotary shaft 7 can be adjusted more easily by processing the annular members 9 and 10 than by processing the magnets 81 to 88.

Note that, in the present invention, when the rotary shaft 7 is rotationally balanced, the annular member 9 need not include the processed region 92. Alternatively, each of the annular members 9 and 10 may include a processed region, depending on the rotational balance of the rotary shaft 7. When the annular member 10 includes the processed region, the processing is performed by cutting a portion of the outer circumferential surface 10c at the rear portion of the annular member 10, similarly to the processed region 92.

The sleeve 11 protects the magnet unit 8 (the magnets 81 to 88). The sleeve 11 prevents the detachment of the magnets 81 to 88 from the rotary shaft 7 and also prevents the scattering of the magnets 81 to 88 when the magnets 81 to 88 are detached. The sleeve 11 is made of, for example, stainless steel. The sleeve 11 has a hollow cylindrical shape with openings at both ends in the axial direction. In the axial direction, the sleeve 11 includes a front end portion 11a and a rear end portion 11b. The front end portion 11a is an example of one end portion of the sleeve in the present invention, and the rear end portion 11b is an example of the other end portion of the sleeve in the present invention. The inner diameter of the sleeve 11 is larger than the outer diameter of each of the magnets 81 to 88 and the outer diameter of each of the annular members 9 and 10.

A portion of the rotary shaft 7 (i.e., the large diameter portion 71), the magnets 81 to 88, and a portion of each of the annular members 9 and 10 are accommodated inside the sleeve 11. The front end portion 11a of the sleeve 11 is disposed in such a way as to overlap with a rear half portion of the annular member 9. The rear end portion 11b of the sleeve 11 is disposed in such a way as to overlap with a front half portion of the annular member 10. That is, in the axial direction and the circumferential direction, the sleeve 11 is disposed in such a way as to cover the magnets 81 to 88 and the portion of each of the annular members 9 and 10. A portion of the annular member 9 not covered by the sleeve 11 (i.e., a front half portion) may be a region that can be processed by cutting (the processed region 92). Similarly, a portion of the annular member 10 not covered by the sleeve 11 (i.e., a rear half portion) may be a region that can be processed by cutting (a processed region of the annular member 10). In this way, each of the annular members 9 and 10 includes the region that is not covered by the sleeve 11 and can be processed by cutting. Thus, the annular members 9 and 10 are easily processed. Accordingly, the rotational balance of the rotary shaft 7 is easily adjustable.

The resin material 12 fixes each of the magnets 81 to 88 to the large diameter portion 71 and also fixes the sleeve 11 to a predetermined position (i.e., a position covering the magnets 81 to 88 and the portion of each of the annular members 9 and 10). The resin material 12 is, for example, an epoxy-based resin adhesive and functions as a first resin material in the present invention by curing of the liquid adhesive. The resin material 12 is filled into the groove portions 91 and 101, into gaps between the large diameter portion 71 and each of the magnets 81 to 88, into gaps between the adjacent magnets 81 to 88, into gaps between the magnet 81 and the annular member 9, into gaps between the magnet 88 and the annular member 10, into gaps between each of the magnets 81 to 88 and the sleeve 11, and into gaps between the portion of each of the annular members 9 and 10 and the sleeve 11. In this state, the resin material 12 abuts the outer circumferential surface 71a of the large diameter portion 71; the groove portions 91 and 101 of the annular members 9 and 10, the rear surface 9b, the front surface 10b, and a portion of each of the outer circumferential surfaces 9c and 10c; the inner circumferential surfaces 81d to 88d, the front surface 81a to 88a, the rear surfaces 81b to 88b, and the outer circumferential surfaces 81c to 88c of the magnets 81 to 88; and the inner circumferential surface of the sleeve 11. That is, each of the magnets 81 to 88 is completely covered with the resin material 12 and is not exposed to the outside. The resin material 12 is also filled into the groove portions 91 and 101. Thus, the pumped liquid does not flow into the rotor R through the groove portions 91 or 101. Thus, the magnets 81 to 88 are not in contact with the pumped liquid in the motor chamber 6 filled with the pumped liquid.

As described above, the large diameter portion 71, the magnets 81 to 88, the pair of annular members 9 and 10, the sleeve 11, and the resin material 12 constitute the rotor R in the present invention. That is, the rotor R includes the magnets 81 to 88, the pair of annular members 9 and 10, the sleeve 11, and the resin material 12. The rotor R in the present invention functions as a rotor having the SPM structure in which the magnet unit 8 is mounted on the outer circumferential surface 71a of the large diameter portion 71.

The following description mainly refers to Figs. 1 and 2. The stator 13 generates the rotating magnetic field that causes the rotor R (the rotary shaft 7) to rotate. In the radial direction, an inner circumferential surface of the stator 13 directly faces an outer circumferential surface of the rotor R (e.g., an outer circumferential surface of the sleeve 11). The stator 13 is a known stator that rotates the rotor R.

The bearings 14 and 15 are mounted to the housing 5 and rotatably supports the rotary shaft 7. The bearing 14 supports the front portion (the small diameter portion 72) of the rotary shaft 7, and the bearing 15 supports the rear portion (the small diameter portion 73) of the rotary shaft 7. The bearings 14 and 15 are, for example, known ball bearings.

### Manufacturing Process of Motor Unit (1)

Next, a manufacturing process (a manufacturing method) of the motor unit 3 will be described below. In the following description, Figs. 1 to 5 will be referred to as appropriate.

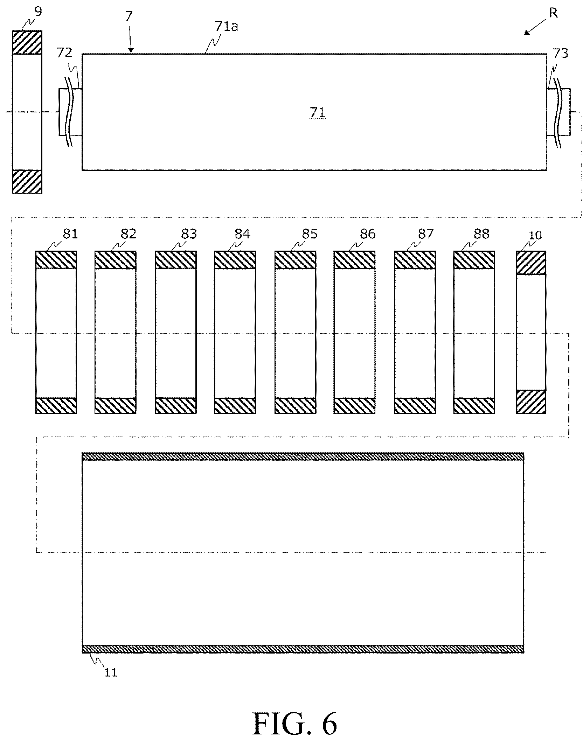

Fig. 6 is an exploded schematic longitudinal sectional view of the rotor R. The figure illustrates the rotary shaft 7 in a non-sectional view.

First, the rotary shaft 7, the pair of annular members 9 and 10, and eight magnetic bodies are prepared. The main manufacturing processes of the motor unit 3 include an annular body mounting step, a sleeve mounting step, a resin material filling step, a magnetizing step, an incorporating step, and a processing step.

The "magnetic body" is a base body of each of the magnets 81 to 88 (the magnet unit 8) before being magnetized. Thus, in the following description, each magnetic body is denoted by the same reference signs "81 to 88" as the corresponding magnets 81 to 88 after magnetization. That is, for example, a magnetic body 81 is a base body to be the magnet 81 after magnetization, and a magnetic body 82 is a base body to be the magnet 82 after magnetization.

Then, the annular members, i.e., the pair of annular members 9 and 10 and the magnetic bodies 81 to 88, are mounted on the rotary shaft 7 (the annular body mounting step).

In the annular body mounting step, first, the large diameter portion 71 is press-fitted into the annular member 9 from the rear side. In this state, the groove portion 91 constitutes a hole that allows the front side and the rear side of the annular member 9 to communicate with each other, together with the outer circumferential surface 71a of the large diameter portion 71.

Then, the large diameter portion 71 is inserted through each of the magnetic bodies 81 to 88 from the front side in a clearance fit state (i.e., loosely fitted). That is, the large diameter portion 71 is inserted through the magnetic body 81, the magnetic body 82, ..., and the magnetic body 88 in this order.

Then, the large diameter portion 71 is press-fitted into the annular member 10 from the front side. In this state, the groove portion 101 constitutes a hole that allows the front side and the rear side of the annular member 10 to communicate with each other, together with the outer circumferential surface 71a of the large diameter portion 71. The annular member 10 is mounted on the large diameter portion 71 in such a way that, in the axial direction, the distance between the rear surface 9b of the annular member 9 and the front surface 10b of the annular member 10 is slightly longer than the length of the magnet unit 8. Thus, a gap that allows each of the magnetic bodies 81 to 88 to move in the front-rear direction can be defined between the annular member 9 and the magnetic body 81, between the adjacent magnetic bodies 81 to 88, and between the magnetic body 88 and the annular member 10. A clearance due to a slight allowance of a clearance fit is defined between the outer circumferential surface 71a of the large diameter portion 71 and the inner circumferential surfaces 81d to 88d of the magnetic bodies 81 to 88.

Then, the rotary shaft 7 on which the annular members 9 and 10 and the magnetic bodies 81 to 88 are mounted is loosely fitted to the sleeve 11 (the sleeve mounting step). Thus, the rotor R before the rotary shaft 7 (the large diameter portion 71), the magnetic bodies 81 to 88, the annular members 9 and 10, and the sleeve 11 are fixed with the resin material 12 (i.e., the rotor R excluding the resin material 12) is constituted.

Then, the resin material 12 is filled into the rotor R in order to fix each of the magnetic bodies 81 to 88 to the large diameter portion 71 and the sleeve 11 to each of the magnetic bodies 81 to 88 (i.e., in order to fix the rotor R to the rotary shaft 7)(the resin material filling step). The resin material 12 is filled, for example, by a known vacuum impregnation process.

In an example of the vacuum impregnation process, first, the rotor R and the rotary shaft 7 before being fixed by the resin material 12 are accommodated in a chamber (not illustrated), and the pressure inside the chamber is reduced to a vacuum atmosphere. In this state, a container that reserves the liquid resin material 12 in advance is also accommodated in the chamber. The purpose of the resin material filling step is to fill the rotor R with the resin material 12, and thus the surfaces of the rotor R and the rotary shaft 7 (the small diameter portions 72 and 73) other than the portion to be filled with the resin material 12 are masked in order to prevent the resin material 12 from adhering thereto.

Then, the rotor R and the rotary shaft 7 are immersed in the container of the resin material 12 under a vacuum atmosphere. In this state, the resin material 12 is impregnated into the interior of the rotor R from the groove portions 91 and 101 of the annular members 9 and 10 and from between each of the annular members 9 and 10 and the sleeve 11. In this state, due to capillary action and the like, the resin material 12 is impregnated into the gaps between the magnets 81 to 88, into the gap between the magnet 81 and the annular member 9, and into the gap between the magnet 88 and the annular member 10. Due to the influence of the surface tension of the resin material 12 and the like, the magnetic bodies 81 to 88 move in the radial direction in such a way that the center of each of the magnetic bodies 81 to 88 and the center of the rotary shaft 7 (the large diameter portion 71) coincide with each other when viewed in the axial direction. Similarly, the magnetic bodies 81 to 88 move in the axial direction in such a way that the intervals between the magnetic bodies 81 to 88 become substantially equal. As a result, the magnets 81 to 88 do not abut one another. Then, the air pressure in the chamber is returned from the vacuum atmosphere to the air atmosphere. As a result, the resin material 12 is impregnated (filled) into the groove portions 91 and 101, into the gaps between the large diameter portion 71 and each of the magnetic bodies 81 to 88, into the gaps between the adjacent magnetic bodies 81 to 88, into the gap between the magnetic body 81 and the annular member 9, into the gap between the magnetic body 88 and the annular member 10, into the gaps between each of the magnetic bodies 81 to 88 and the sleeve 11, and into the gaps between the portion of each of the annular members 9 and 10 and the sleeve 11.

Thereafter, the resin material 12 is cured, and thus each of the magnetic bodies 81 to 88 is fixed to the large diameter portion 71 and the sleeve 11 is fixed to each of the magnetic bodies 81 to 88 and the annular members 9 and 10.

Then, each of the magnetic bodies 81 to 88 is magnetized by a known magnetization method (the magnetizing step). Due to the magnetizing step, each of the magnetic bodies 81 to 88 becomes, for example, the magnets 81 to 88 having two magnetic poles. Thus, the rotor R having the SPM structure in which the rotary shaft 7, the magnets 81 to 88, the annular members 9 and 10, and the sleeve 11 are integrated (fixed) by the resin material 12 is manufactured.

Then, the rotary shaft 7, the rotor R, the stator 13, and the bearings 14 and 15 are incorporated into the housing 5 (the incorporating step).

Then, a portion of the annular members 9 and 10 is processed as necessary in order to adjust the rotational balance of the rotary shaft 7 (the rotor R), and the processed region 92 is formed (the processing step).

Note that, in the present invention, the magnetizing step may be performed after the processing step.

The motor unit 3 is manufactured by the manufacturing method described above. In the present invention, the magnet unit 8 is composed of eight seamless annular magnets 81 to 88. Thus, when a centrifugal force is applied, the tensile strength of each of the magnets 81 to 88 is higher than the tensile strength of a magnet having a joint. The magnets 81 to 88 are integrated and fixed by the resin material 12. Thus, the detachment of the magnets 81 to 88 due to the centrifugal force accompanying the rotation of the rotor R (i.e., the rotation of the rotary shaft 7) is unlikely to occur. As a result, the magnets 81 to 88 are unlikely to scatter, and the strength required for the sleeve 11 is reduced. Accordingly, the thickness of the sleeve 11, i.e., the outer diameter of the rotor R (hereinafter referred to as "rotor diameter") can be reduced. Thus, the energy loss (fluid loss) due to the resistance (friction) of the pumped liquid that is in contact with the rotor R in the motor chamber 6 is reduced. Thus, the rotor R is capable of withstanding high-speed rotation. Accordingly, the rotor R having the SPM structure suitable for high-speed rotation is achieved.

The large diameter portion 71 is loosely fitted to each of the magnets 81 to 88 with a clearance fit. Thus, the dimensional tolerance required for each of the magnetic bodies (the magnets) 81 to 88 to be manufactured by sintering is more relaxed than the dimensional tolerance required for the conventional annular magnet into which the rotor core is press-fitted. The magnet unit 8 is divided into the magnets 81 to 88. Thus, the dimensional tolerance required for each of the magnetic bodies (the magnets) 81 to 88 to be manufactured by sintering is more relaxed than the dimensional tolerance required for the conventional single long cylindrical magnet. Furthermore, the assembly of the rotor R is easier than the assembly of a rotor using the conventional single long cylindrical magnet that requires dimensional accuracy.

Gaps into which the resin material 12 can penetrate are defined between the adjacent magnets 81 to 88, and the gaps are filled with the resin material 12. In this state, the magnets 81 to 88 are integrated by the resin material 12. Herein, the coefficient of thermal expansion of the large diameter portion 71 (the rotary shaft 7) that is a rotor core is different from the coefficient of thermal expansion of each of the magnets 81 to 88. Thus, when a temperature environment in which the pump device 1 is used is different from a temperature environment at the time of manufacturing the rotor R, a difference in the amount of thermal expansion/thermal contraction occurs between the large diameter portion 71 and the magnet portion 8 in the axial direction. Since both the large diameter portion 71 and the magnet portion 8 are made of metal having a high Young's modulus, the difference cannot be absorbed, and a large distorting force (i.e., stress) occurs between the large diameter portion 71 and the magnet portion 8. As a result, in a case where the magnet portion 8 has an undivided structure, fixing the magnet portion 8 to the large diameter portion 71 becomes difficult. In the present embodiment, the magnet unit 8 is divided into the eight magnets 81 to 88, and the difference in the amount of expansion/contraction between the large diameter portion 71 and each of the magnets 81 to 88 is smaller than the difference in a case where the magnet portion 8 is not divided. Since the resin material 12 having the Young's modulus lower than that of metal is filled between the magnets 81 to 88, the distorting force (i.e., the stress) due to the thermal expansion/thermal contraction is relaxed (absorbed) by the resin material 12. In this way, the influence of thermal expansion/thermal contraction that occurs in the large diameter portion 71 and the magnets 81 to 88 is reduced.

### Conclusion (1)

According to the embodiment described above, the motor unit 3 includes the rotor R and the rotary shaft 7. The rotary shaft 7 includes the large diameter portion 71. The rotor R includes a plurality of (eight) magnets 81 to 88 to be fixed to the large diameter portion 71 and the resin material 12 that fixes the magnets 81 to 88 to the large diameter portion 71. Each of the magnets 81 to 88 has a seamless annular shape. According to this configuration, the tensile strength of each of the magnets 81 to 88 when a centrifugal force is applied is higher than the tensile strength of a magnet having a joint, and thus the detachment of each of the magnets 81 to 88 due to the centrifugal force accompanying the rotation of the rotor R is unlikely to occur, and scattering of the magnets 81 to 88 is also unlikely to occur. Thus, in the rotor R (the motor unit 3), the thickness of the sleeve 11 can be reduced and the rotor diameter can be reduced. Accordingly, the energy loss (fluid loss) due to the resistance (friction) of the pumped liquid in contact with the rotor R in the motor chamber 6 is reduced. Thus, the rotor R is capable of withstanding high-speed rotation. Accordingly, the rotor R having the SPM structure suitable for high-speed rotation is achieved.

In the radial direction, each of the magnets 81 to 88 is disposed outside the large diameter portion 71 and is disposed along the large diameter portion 71 in the axial direction. The resin material 12 is filled between the large diameter portion 71 and each of the magnets 81 to 88 and between the adjacent magnets 81 to 88. According to this configuration, the dimensional tolerance required for each of the magnetic bodies (the magnets) 81 to 88 to be manufactured by sintering is more relaxed than the dimensional tolerance required for the conventional annular magnet into which the rotor core is press-fitted. The magnet unit 8 is divided into the magnets 81 to 88. Thus, the dimensional tolerance required for each of the magnetic bodies (the magnets) 81 to 88 to be manufactured by sintering is more relaxed than the dimensional tolerance required for the conventional single long cylindrical magnet. Furthermore, the assembly of the rotor R is easier than the assembly of a rotor using the conventional single long cylindrical magnet that requires dimensional accuracy. Furthermore, the difference in the amount of thermal expansion/thermal contraction between the large diameter portion 71 and each of the magnets 81 to 88 is smaller than the difference in the case where the magnet portion 8 is not divided.

According to the embodiment described above, the pump device 1 includes the motor unit 3 and the impeller 4. According to this configuration, the pump device 1 including the rotor R having the SPM structure suitable for high-speed rotation is achieved.

According to the embodiment described above, the resin material 12 is filled into the gaps between the adjacent magnets 81 to 88 in the axial direction. According to this configuration, the distorting force (i.e., the stress) due to the thermal expansion/thermal contraction is relaxed by the resin material 12. Thus, the influence of thermal expansion/thermal contraction that occurs in the large diameter portion 71 and the magnets 81 to 88 is reduced.

According to the embodiment described above, the rotor R includes a pair of annular members 9 and 10 having an annular shape and mounted on the large diameter portion 71. In the axial direction, the pair of annular members 9 and 10 is disposed in such a way as to sandwich the plurality of magnets 81 to 88. In the radial direction, the pair of annular members 9 and 10 is disposed outside the large diameter portion 71. At least one annular member (e.g., the annular member 9) of the pair of annular members 9 and 10 includes the processed region 92 that is processed in order to adjust the rotational balance of the rotary shaft 7. According to this configuration, the annular members 9 and 10 that are easier to process than the magnets 81 to 88 manufactured by sintering are disposed in such a way as to sandwich the magnets 81 to 88 in the axial direction. As a result, the rotational balance of the rotary shaft 7 can be easily adjusted.

According to the embodiment described above, the outer circumferential surface 71a of the large diameter portion 71 abuts the inner circumferential surfaces 9d and 10d of the pair of annular members 9 and 10, respectively. Each of the pair of annular members 9 and 10 includes the groove portions 91 and 101 that are disposed on the inner circumferential surfaces 9d and 10d of the annular members 9 and 10, respectively. In the axial direction, the groove portions 91 and 101 communicates with one direction side and the other direction side of the annular members 9 and 10. According to this configuration, even though the large diameter portion 71 is press-fitted into each of the annular members 9 and 10, the resin material 12 can be filled (impregnated) into the rotor R from the groove portions 91 or 101.

According to the embodiment described above, the resin material 12 is filled into the groove portions 91 and 101. According to this configuration, the pumped liquid does not penetrate into the interior of the rotor R through the groove portions 91 or 101.

According to the embodiment described above, the large diameter portion 71 (a portion of the rotary shaft 7) functions as the core portion of the rotor core. According to this configuration, the outer diameter of the core portion can be reduced close to the outer diameter of the rotary shaft 7. As a result, the rotor diameter can be further reduced.

According to the embodiment described above, in the circumferential direction, the rotor R includes the hollow cylindrical sleeve 11 disposed in such a way as to cover the magnets 81 to 88. The resin material 12 is filled into the gaps between each of the magnets 81 to 88 and the sleeve 11. According to this configuration, the magnets 81 to 88 (the entire magnet unit 8) are covered with and protected by the resin material 12, and the surface of the magnet unit 8 is also protected by the sleeve 11. The magnet unit 8 is entirely covered (protected) by the resin material 12 and the sleeve 11 and is thus not exposed to the outside. Thus, each of the magnets 81 to 88 does not come into contact with the pumped liquid in the motor chamber 6 filled with the pumped liquid. As a result, no damage to the magnet unit 8 caused by the pumped liquid occurs (i.e., no influence on the magnet unit 8).

According to the embodiment described above, the front end portion 11a of the sleeve 11 covers a portion (the rear half portion) of the annular member 9, and the rear end portion 11b of the sleeve 11 covers a portion (the front half portion) of the annular member 10. According to this configuration, in the circumferential direction, the sleeve 11 is disposed in such a way as to cover each of the magnets 81 to 88 and the portions of the annular members 9 and 10. A portion of the annular member 9 not covered by the sleeve 11 (the front half portion) may be a region that can be processed by cutting in the assembled rotor R (the processed region 92). Similarly, a portion of the annular member 10 not covered by the sleeve 11 (the rear half portion) may be a region that can be processed by cutting in the assembled rotor R (the processed region of the annular member 10). Each of the annular members 9 and 10 has a region that is not covered by the sleeve 11 and can be processed by cutting, and thus the annular members 9 and 10 are easily processed. Accordingly, the rotational balance of the rotary shaft 7 can be easily adjusted.

Note that, in the first embodiment, each of the adjacent magnets 81 to 88 may abut each other, and the resin material 12 need not be filled into the gaps between the adjacent magnets 81 to 88, or the resin material 12 may be partially impregnated due to unevenness and the like. The resin material 12 need not be filled into the gaps between some of the magnets 81 to 88 among the adjacent magnets 81 to 88. Even with this configuration, the rotor R having the SPM structure suitable for high-speed rotation can be achieved.

### Motor Unit (2)

### Configuration of Motor Unit (2)

Next, another embodiment (hereinafter referred to as "second embodiment") of the rotating electric machine (the motor unit) according to the present invention will be described below with a focus on differences from the embodiment described above (hereinafter referred to as "first embodiment"). The motor unit according to the second embodiment differs from the motor unit according to the first embodiment in that a second resin material is applied to the magnet. In the following description of the second embodiment, the same members and the members with a common function as in the first embodiment are indicated with the same reference signs as in the first embodiment for convenience of description, and detailed description thereof will be omitted. In the following description, Figs. 1 to 6 are referred to as appropriate.

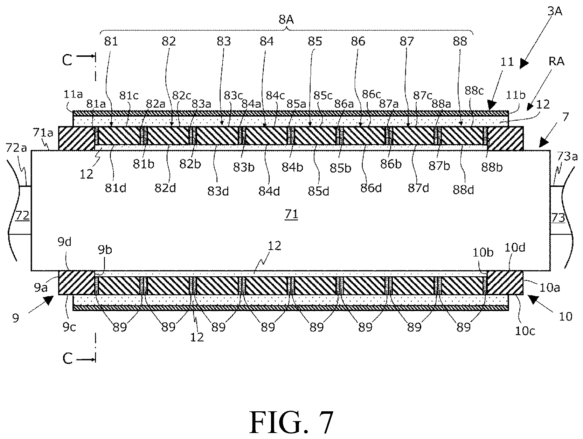

Fig. 7 is a partial schematic longitudinal sectional view of a motor unit illustrating the second embodiment of the motor unit according to the present invention. The figure illustrates the configuration of the motor unit 3A with a portion thereof omitted. The figure illustrates the rotary shaft 7 in a non-sectional view.

The motor unit 3A includes the housing 5, the motor chamber 6, the rotary shaft 7, a magnet unit 8A, the pair of annular members 9 and 10, the sleeve 11, the resin material 12, the stator 13, and the bearings 14 and 15. The large diameter portion 71, the magnet unit 8A, the pair of annular members 9 and 10, the sleeve 11, and the resin material 12 constitute a rotor RA in the present invention. That is, the motor unit 3A includes the rotor RA. In the second embodiment, the pump device 1 includes the motor unit 3A instead of the motor unit 3.

The magnet unit 8A is fixed to the large diameter portion 71 and rotates the rotary shaft 7 by the rotating magnetic field generated in the stator 13. The magnet unit 8A includes a plurality of (eight in the present embodiment) magnets 81 to 88 and resin material 89. Each of the magnets 81 to 88 includes the respective front surface 81a to 88a, the respective rear surface 81b to 88b, the respective outer circumferential surface 81c to 88c, and the respective inner circumferential surface 81d to 88d.

The resin material 89 forms a gap to be filled with the resin material 12 between the adjacent magnets 81 to 88 and also relaxes (absorbs) stress due to thermal expansion/thermal contraction of the magnets 81 to 88 between the adjacent magnets 81 to 88, similarly to the resin material 12. The resin material 89 is, for example, an epoxy-based resin adhesive, the same as the resin material 12. The resin material 89 is applied to the front surfaces 81a to 88a and the rear surfaces 81b to 88b of the magnets 81 to 88. In the axial direction, the length (thickness) of the resin material 89 is, for example, several tens of micrometers to several hundred micrometers. That is, the resin material 89 has a thin-film form. The resin material 89 is an example of the second resin material in the present invention.

Note that, in the present invention, the material of the resin material 89 is not limited to the epoxy-based resin adhesive.

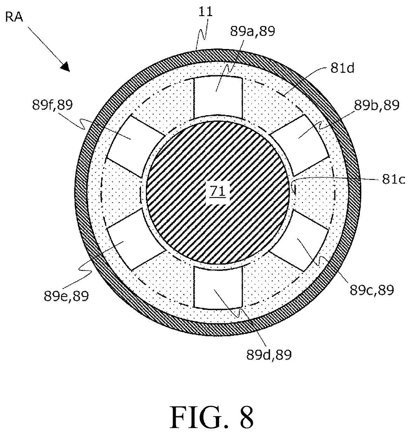

Fig. 8 is a schematic cross-sectional view of the motor 3A, taken along the line C-C in Fig. 7. The figure illustrates a cross-section in a virtual plane that includes the front surface of the resin material 89 applied to the front surface 81a of the magnet 81 (i.e., the resin material 89 is illustrated in a non-sectional view). For convenience of description, the figure illustrates the outer circumferential surface 81c and the inner circumferential surface 81d of the magnet 81 by two dot chain lines.

The resin material 89 includes six resin materials 89a, 89b, 89c, 89d, 89e, and 89f applied to six locations on each of the front surface 81a and the rear surface 81b of the magnet 81. The resin materials 89a to 89f are disposed at equal intervals in the circumferential direction. Each of the resin materials 89a to 89f is applied along the radial direction from the inner end to the outer end of each of the front surface 81a and the rear surface 81b. That is, each of the resin materials 89a to 89f is applied radially. When viewed in the axial direction, the positions of the resin materials 89a to 89f applied to the front surface 81a are the same as the positions of the resin materials 89a to 89f applied to the rear surface 81b. In the circumferential direction, the gaps between the adjacent resin materials 89a to 89f are filled with the resin material 12. In the following description, when each of the resin materials 89a to 89f is not particularly distinguished, each of the resin materials 89a to 89f is described as "resin material 89.

The resin material 89 is also applied to the front surfaces 82a to 88a and the rear surfaces 82b to 88b of the magnets 82 to 88 in a manner similar to the magnet 81. That is, on each of the front surfaces 82a to 88a and the rear surfaces 82b to 88b of the magnets 82 to 88, the resin materials 89a to 89f are applied at six locations. Thus, the resin material 89 is disposed between each of the magnets 81 to 88, between the magnet 81 and the annular member 9, and between the magnet 88 and the annular member 10.

Note that, in the present invention, the number of the resin materials 89 radially applied to each of the front surfaces 81a to 88a and the rear surfaces 81b to 88b is not limited to "six". That is, for example, the number of resin materials 89 may be "five" or less, or "seven" or greater. Each of the resin materials 89a to 89f may be applied in such a way that the adjacent resin materials 89a to 89f are interconnected. In this case, for example, each of the resin materials 89a to 89f may be applied so as to be integrated by a ring-shaped resin material 89. In this case, the ring-shaped resin material 89 is applied, for example, in such a way as to connect, in the circumferential direction, the inner portions in the radial direction of the resin materials 89a to 89f to each other.

### Manufacturing Process of Motor Unit (2)

Next, a manufacturing process (manufacturing method) of the motor unit 3A will be described below. In the following description, Figs. 6 to 8 will be referred to as appropriate.

First, the rotary shaft 7, the pair of annular members 9 and 10, and the eight magnetic bodies 81 to 88 are prepared. The main manufacturing processes of the motor unit 3A include an applying step, an annular body mounting step, a sleeve mounting step, a resin material filling step, a magnetizing step, an incorporating step, and a processing step.

Then, the resin material 89 is applied to the front surfaces 81a to 88a and the rear surfaces 81b to 88b of the magnetic bodies 81 to 88 (the applying step). Specifically, each of the resin materials 89a to 89f is applied along the radial direction and at equal intervals in the circumferential direction (i.e., radially). In this state, each of the resin materials 89a to 89f is applied by spraying, brushing, or the like in a state where areas other than the portions to be coated are covered with masking tape or a mask, for example. Then, the resin material 89 applied to each of the magnetic bodies 81 to 88 is dried.

Then, the annular members, i.e., the pair of annular members 9 and 10 and the magnetic bodies 81 to 88, are mounted on the rotary shaft 7 (the annular body mounting step).

In the annular body mounting step, the annular member 10 is mounted on the large diameter portion 71 in such a way as to lightly press the magnetic bodies 81 to 88 forward. In the circumferential direction, the magnetic bodies 81 to 88 are disposed in such a way that the resin materials 89a to 89f applied to the respective magnetic bodies 81 to 88 are aligned at the same positions. Thus, for example, in the gap between adjacent magnetic bodies 81 and 82, the resin material 89 applied to the rear surface 81b of the magnetic body 81 comes into contact with the resin material 89 applied to the front surface 82a of the magnetic body 82. As a result, in the circumferential direction, gaps to be filled with the resin material 12 are formed between the adjacent resin materials 89a to 89f. The gaps are similarly formed between the adjacent magnetic bodies 82 to 88. A clearance is defined between the outer circumferential surface 71a of the large diameter portion 71 and the inner circumferential surfaces 81d to 88d of the magnetic bodies 81 to 88.

Note that, in the present invention, the annular body mounting step may be performed without drying the resin material 89, and the adjacent magnets 81 to 88 may be adhered to each other by the resin material 89.

Then, the sleeve mounting step and the resin material filling step are performed. In the resin material filling step, the resin material 12 is impregnated (filled) into the groove portions 91 and 101, into the gaps between the large diameter portion 71 and each of the magnetic bodies 81 to 88, into the gaps between the adjacent magnetic bodies 81 to 88 (between the adjacent resin materials 89a to 89f), into the gap between the magnetic body 81 and the annular member 9 (between the adjacent resin materials 89a to 89f), into the gap between the magnetic body 88 and the annular member 10 (between the adjacent resin materials 89a to 89f), into the gaps between each of the magnetic bodies 81 to 88 and the sleeve 11, and into the gaps between the portion of each of the annular members 9 and 10 and the sleeve 11. That is, the resin material 12 also abuts the resin material 89. Thereafter, the resin material 12 is cured.

Then, the magnetizing step, the incorporating step, and the processing step are performed.

In the motor unit 3A manufactured by the manufacturing method described above, when a centrifugal force is applied, the tensile strength of each of the magnets 81 to 88 is high and the detachment of each of the magnets 81 to 88 is unlikely to occur, similarly to the motor unit 3 according to the first embodiment. The rotor diameter can be reduced. Thus, energy loss (fluid loss) in the motor chamber 6 is reduced, and the rotor RA is capable of withstanding high-speed rotation. Accordingly, the rotor RA having the SPM structure suitable for high-speed rotation is achieved.

Similarly, the dimensional tolerance required for each of the magnetic bodies (the magnets) 81 to 88 is more relaxed than the dimensional tolerance required for the conventional magnet. Accordingly, the assembly of the rotor RA is easier than the assembly of the conventional rotor.

A gap into which the resin material 12 can penetrate is reliably defined by the resin material 89 between the adjacent magnets 81 to 88, and the resin material 12 is filled into the gap. That is, in the second embodiment, the resin material 12 having the Young's modulus lower than that of metal is filled between the magnets 81 to 88, and the resin material 89 is also applied. Thus, the distorting force (i.e., the stress) due to the thermal expansion/thermal contraction is further relaxed (absorbed) by the resin materials 12 and 89.

Note that, in the annular body mounting step, the annular member 10 may be mounted on the large diameter portion 71 in such a way that the distance between the rear surface 9b of the annular member 9 and the front surface 10b of the annular member 10 is slightly longer than the length of the magnet unit 8. In this case, the resin material 12 may be filled into the gaps between the opposing resin materials 89, and into the gaps between the opposing resin material 89 and the annular member 9 or 10, similarly to the first embodiment.

In the resin material filling step, the resin material 12 may also be filled into the gaps between the opposing resin materials 89 and into the gaps between the opposing resin material 89 and the annular members 9 and 10 by capillary action, for example.

### Conclusion (2)

According to the second embodiment described above, the same effect as that of the motor unit 3 of the first embodiment is obtained in the motor unit 3A.

According to the second embodiment described above, the rotor RA includes the resin material 89 disposed between the adjacent magnets 81 to 88. The resin material 89 abuts the resin material 12 between the adjacent magnets 81 to 88. According to this configuration, the resin materials 12 and 89, each having the Young's modulus lower than that of metal, are respectively filled and applied between the adjacent magnets 81 to 88, and thus the distorting force (the stress) due to the thermal expansion/thermal contraction is further relaxed (absorbed) by the resin materials 12 and 89.

According to the second embodiment described above, the resin material 89 is applied to the front surfaces 81a to 88a and the rear surfaces 81b to 88b of the magnets 81 to 88. According to this configuration, the thickness and the shape of the resin material 89 can be adjusted as desired. Thus, the position and the amount of the resin material 12 filled in the gaps between the adjacent magnets 81 to 88 can also be adjusted as desired.

Note that, in the second embodiment, the shape of the resin material 89 applied to each of the magnets 81 to 88 is not limited to the shape in the present embodiment. That is, for example, the shape of the resin material 89 applied to each of the front surfaces 81a to 88a may be different from the shape of the resin material 89 applied to each of the rear surfaces 81b to 88b. For example, the resin material 89 applied to each of the front surfaces 82a to 88a may be disposed in such a way as that each does not oppose the resin material 89 applied to each of the rear surfaces 81b to 87b. For example, the resin material 89 may be applied in a ring shape concentric with the magnets 81 to 88.

In the second embodiment, the resin material 89 may be configured in the form of a seal and attached to the magnets 81 to 88.

In the second embodiment, the thickness of the resin material 89 may vary. In other words, the distances between the adjacent magnets 81 to 88, between the magnet 81 and the annular member 9, and between the magnet 88 and the annular member 10 may be different. That is, for example, in the axial direction, the thickness of the resin material 89 may be configured to increase from the central portion of the core portion toward the end portions thereof. Due to the difference in the amount of thermal expansion/thermal contraction between the large diameter portion 71 and the magnet unit 8, the distorting force (the stress) caused by the difference increases as the distance from the central portion increases in the axial direction. According to this configuration, the resin material 89 can absorb more stress than the resin material 89 in the second embodiment.

### Motor Unit (3)

### Configuration of Motor Unit (3)

Next, still another embodiment (hereinafter referred to as "third embodiment") of the rotating electric machine (the motor unit) according to the present invention will be described below with a focus on differences from the first and second embodiments described above. The motor unit according to the third embodiment differs from the motor units according to the first and second embodiments in that a spacer is included. In the following description of the third embodiment, the same members and the members with a common function as in the first embodiment are indicated with the same reference signs as in the first embodiment for convenience of description, and detailed description thereof will be omitted. In the following description, Figs. 1 to 6 will be referred to as appropriate.

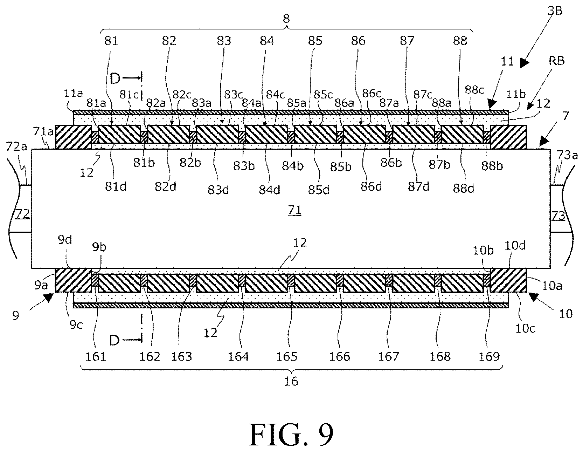

Fig. 9 is a partial schematic longitudinal sectional view of a motor unit illustrating the third embodiment of the motor unit according to the present invention. The figure illustrates the configuration of the motor unit 3B with a portion thereof omitted. The figure illustrates the rotary shaft 7 in a non-sectional view.

The motor unit 3B includes the housing 5, the motor chamber 6, the rotary shaft 7, the magnet unit 8, the pair of annular members 9 and 10, the sleeve 11, the resin material 12, the stator 13, bearings 14 and 15, and a spacer unit 16. The large diameter portion 71, the magnet unit 8, the pair of annular members 9 and 10, the sleeve 11, and the resin material 12 constitute a rotor RB in the present invention. That is, the motor unit 3B includes the rotor RB. In the third embodiment, the pump device 1 includes the motor unit 3B instead of the motor unit 3.

The spacer unit 16 is disposed between the adjacent magnets 81 to 88, between the annular member 9 and the magnet 81, and between the annular member 10 and the magnet 88 and forms gaps to be filled with the resin material 12 therebetween. The spacer unit 16 includes a plurality of (nine in the present embodiment) spacers 161, 162, 163, 164, 165, 166, 167, 168, and 169. The spacers 161 to 169 are an example of the second resin material in the present invention.

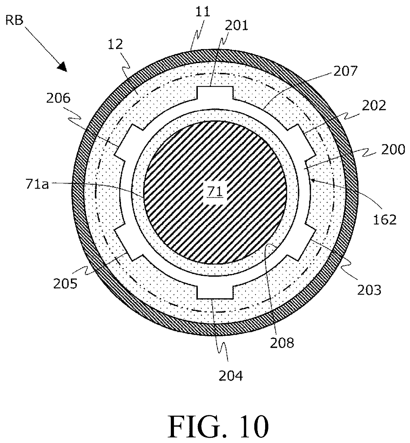

Fig. 10 is a schematic cross-sectional view of the rotor RB, taken along the line D-D in Fig. 9. The figure illustrates a cross-section in a virtual plane that includes the front surface of the spacer 162 (i.e., the spacer 162 is illustrated in a non-sectional view). The figure illustrates the front surface of the spacer 162 for convenience of description, but the shape of the spacer 162 is the same as the shapes of the other spacers 161 and 163 to 169. Accordingly, the configuration and the shape of the spacer 162 are common to the configurations and the shape of the spacers 161 and 163 to 169. In the following description, Fig. 9 will be referred to as appropriate.

The spacer 162 has an annular shape and is substantially gear-shaped. The spacer 162 is made of, for example, synthetic resin (e.g., epoxy resin, polyimide resin). In the radial direction, the spacer 162 is disposed outside the large diameter portion 71. In the axial direction, the spacer 162 is disposed between the magnet 81 and the magnet 82 and abuts the magnets 81 and 82. The spacer 162 includes an annular main body 200, six tooth portions 201, 202, 203, 204, 205, and 206, an outer circumferential surface 207, and an inner circumferential surface 208. Each of the tooth portions 201 to 206 protrudes outward from the main body 200 in the radial direction. The tooth portions 201 to 206 are disposed at equal intervals in the circumferential direction. The outer circumferential surface 207 has an uneven shape including the outer peripheries of the tooth portions 201 to 206. The inner diameter of the spacer 162 is larger than the outer diameter of the large diameter portion 71, and the outer diameter of the spacer 162 is smaller than the outer diameter of each of the magnets 81 to 88 and the outer diameter of each of the annular members 9 and 10. In the following description, "main body", "tooth portion", "outer circumferential surface", and "inner circumferential surface" included in the other spacers 161 and 163 to 169 are indicated with the same reference signs as those indicated for "the main body 200", "the tooth portions 201 to 206", "the outer circumferential surface 207", and "the inner circumferential surface 208" included in the spacer 162, for convenience of description.

As illustrated in Fig. 10, each of the spacers 161 to 169 is disposed between the adjacent magnets 81 to 88, between the magnet 81 and the annular member 9, and between the magnet 88 and the annular member 10. That is, the spacer 161 is disposed between the magnet 81 and the annular member 9, the spacer 163 is disposed between the magnet 82 and the magnet 83, the spacer 164 is disposed between the magnet 83 and the magnet 84, the spacer 165 is disposed between the magnet 84 and the magnet 85, the spacer 166 is disposed between the magnet 85 and the magnet 86, the spacer 167 is disposed between the magnet 86 and the magnet 87, the spacer 168 is disposed between the magnet 87 and the magnet 88, and the spacer 169 is disposed between the magnet 88 and the annular member 10.

In the axial direction, the length (thickness) of each of the spacers 161 to 169 is the same. Accordingly, in the axial direction, the distances between the adjacent magnets 81 to 88, between the magnet 81 and the annular member 9, and between the magnet 88 and the annular member 10 are the same.

As described above, the configuration and the shape of each of the spacers 161 and 163 to 169 are common to the configuration and the shape of the spacer 162. Thus, the description of the configuration and the shape of each of the spacers 161 and 163 to 169 will be omitted.

### Manufacturing Process of Motor Unit (3)

Next, a manufacturing process (manufacturing method) of the motor unit 3B will be described below. In the following description, Figs. 6 to 9 will be referred to as appropriate.

First, the rotary shaft 7, the pair of annular members 9 and 10, the eight magnetic bodies 81 to 88, and the nine spacers 161 to 169 are prepared. The main manufacturing processes of the motor unit 3B include an annular body mounting step, a sleeve mounting step, a resin material filling step, a magnetizing step, an incorporating step, and a processing step.

Then, the annular members, i.e., the magnetic bodies 81 to 88, the pair of annular members 9 and 10, and the spacers 161 to 169 are mounted on the rotary shaft 7 (the annular body mounting step).

In the annular body mounting step, the large diameter portion 71 is inserted alternately through each of the spacers 161 to 169 and each of the magnetic bodies 81 to 88 from the front side in a clearance fit state (i.e., loosely fitted). That is, the large diameter portion 71 is inserted through the spacer 161, the magnetic body 81, the spacer 162, the magnetic body 82, ..., the spacer 168, the magnetic body 88, and the spacer 169 in this order.

In the annular body mounting step, the annular member 10 is mounted on the large diameter portion 71 in such a way as to lightly press the magnetic bodies 81 to 88 and the spacers 161 to 169 forward. That is, each spacer 161 to 169 is disposed between the annular member 9 and the magnetic material 81, between the adjacent magnetic bodies 81 to 88, and between the magnetic material 88 and the annular member 10. Thus, a gap corresponding to the thickness of each spacer 161 to 169 is defined between the annular member 9 and the magnetic material 81, between the adjacent magnetic bodies 81 to 88, and between the magnetic material 88 and the annular member 10. A gap is defined between the outer circumferential surface 71a of the large diameter portion 71 and each of the inner circumferential surfaces 81d to 88d of the magnetic bodies 81 to 88, and between the outer circumferential surface 71a and the inner circumferential surface 208 of each of the spacers 161 to 169.

Then, the sleeve mounting step and the resin material filling step are performed. In the resin material filling step, the resin material 12 is impregnated (filled) into the groove portions 91 and 101, into the gap between the large diameter portion 71 and each of the magnetic bodies 81 to 88, into the gaps between the adjacent magnetic bodies 81 to 88, into the gap between the magnetic body 81 and the annular member 9, into the gap between the magnetic body 88 and the annular member 10, into the gap between each of the magnetic bodies 81 to 88 and the sleeve 11, and into the gap between the portion of each of the annular members 9 and 10 and the sleeve 11. That is, the resin material 12 also abuts the spacers 161 to 169. In this state, due to the influence of the surface tension of the resin material 12 and the like, the spacers 161 to 169 move in the radial direction in such a way that the center of each of the spacers 161 to 169 and the center of the rotary shaft 7 (the large diameter portion 71) coincide with each other when viewed in the axial direction.

Thereafter, the resin material 12 is cured, and thus each of the magnetic bodies 81 to 88 and each of the spacers 161 to 169 are fixed to the large diameter portion 71 and the sleeve 11 is fixed to the magnetic bodies 81 to 88, the annular members 9 and 10, and the spacers 161 to 169.

Then, the magnetizing step, the incorporating step, and the processing step are performed.

In the motor unit 3B manufactured by the manufacturing method described above, when a centrifugal force is applied, the tensile strength of each of the magnets 81 to 88 is high and the detachment of each of the magnets 81 to 88 is unlikely to occur, similarly to the motor unit 3 according to the first embodiment. The rotor diameter can be reduced. Thus, energy loss (fluid loss) in the motor chamber 6 is reduced, and the rotor RB is capable of withstanding high-speed rotation. Accordingly, the rotor RB having the SPM structure suitable for high-speed rotation is achieved.

Similarly, the dimensional tolerance required for each of the magnetic bodies (the magnets) 81 to 88 is more relaxed than the dimensional tolerance required for the conventional magnet. Accordingly, the assembly of the rotor RB is easier than the assembly of the conventional rotor.

A gap into which the resin material 12 can penetrate is reliably defined by the spacers 161 to 169 between the adjacent magnets 81 to 88. In the axial direction, the size of the gap can be adjusted as desired by the thickness of each of the spacers 161 to 169. The resin material 12 is filled into the gaps. That is, in the third embodiment, the resin material 12 having the Young's modulus lower than that of metal is filled between the adjacent magnets 81 to 88 and the spacers 161 to 169 are also disposed, and thus the distorting force (i.e., the stress) due to the thermal expansion/thermal contraction is further relaxed (absorbed).

### Conclusion (3)

According to the third embodiment described above, the same effect as that of the motor unit 3 of the first embodiment is obtained in the motor unit 3B. The distorting force (i.e., the stress) due to the thermal expansion/thermal contraction is further relaxed (absorbed) by the resin material 12 and the spacers 161 to 169.

According to the third embodiment described above, the rotational balance of the rotary shaft 7 can be easily adjusted, similarly to the first embodiment. The resin material 12 can be filled (impregnated) into the rotor R through the groove portions 91 and 101, and each of the magnets 81 to 88 does not come into contact with the pumped liquid in the motor chamber 6.

According to the embodiment described above, the rotor RB includes the plurality of spacers 162 to 168 disposed between the adjacent magnets 81 to 88. Each of the spacers 162 to 168 abuts the resin material 12. According to this configuration, a gap equivalent to the thickness of each of the spacers 162 to 168 can be reliably defined between the adjacent magnets 81 to 88. Thus, the resin material 12 is also filled into the gaps, and the magnets 81 to 88 and the spacers 162 to 168 are integrated by the resin material 12. As a result, the strength of the rotor RB (the motor unit 3B) is increased. The thickness and the shape of each of the spacers 161 to 169 can be adjusted as desired. Thus, the position and the amount of the resin material 12 filled into the gaps between the adjacent magnets 81 to 88 can also be adjusted as desired.

Note that, in the third embodiment, the shape of each of the spacers 161 to 169 is not limited to a substantially gear shape as long as a predetermined gap can be ensured between the adjacent magnets 81 to 88, between the magnet 81 and the annular member 9, and between the magnet 88 and the annular member 10. That is, for example, each of the spacers 161 to 169 need not include the tooth portions 201 to 206. In this case, the shape of each of the spacers 161 to 169 may be an annular shape formed of only the main body 200 as illustrated in Fig. 10 or another polygonal shape.

In the third embodiment, the thicknesses of the spacers 161 to 169 may be different from one another. In other words, the distances between the adjacent magnets 81 to 88, between the magnet 81 and the annular member 9, and between the magnet 88 and the annular member 10 may be different. That is, the thickness of each of the spacers 161 to 169 may be appropriately determined depending on thermal expansion/thermal contraction that occurs between the large diameter portion 71 and the magnet unit 8. That is, for example, in the axial direction, the thickness of each of the spacers 161 to 169 may be configured to increase from the central portion of the core portion toward the end portions thereof. As described above, due to the difference in the amount of thermal expansion/thermal contraction between the large diameter portion 71 and the magnet unit 8, the distorting force (i.e., the stress) caused by the difference increases as the distance from the central portion increases in the axial direction. According to this configuration, the spacers 161 to 169 can absorb more stress than the spacers 161 to 169 in the third embodiment.

### Motor Unit (4)

### Configuration of Motor Unit (4)

Next, still another embodiment (hereinafter referred to as "fourth embodiment") of the rotating electric machine (the motor unit) according to the present invention will be described below with a focus on differences from the first embodiment described above. The motor unit according to the fourth embodiment differs from the first embodiment in that a filament is included. In the following description of the fourth embodiment, the same members and the members with a common function as in the first embodiment are indicated with the same reference signs as in the first embodiment for convenience of description, and detailed description thereof will be omitted. In the following description, Figs. 1 to 6 will be referred to as appropriate.

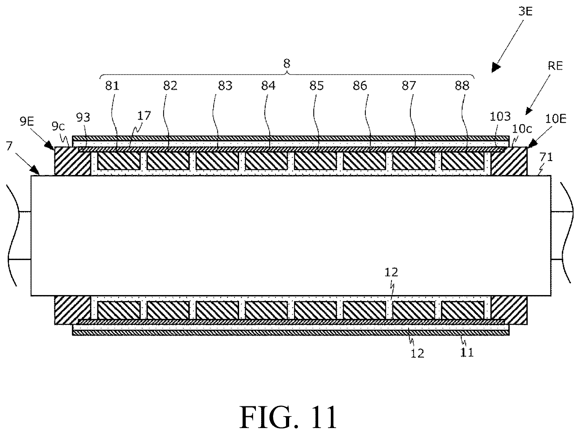

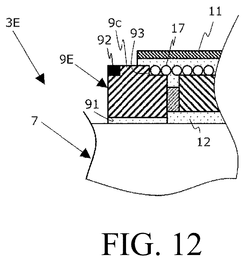

Fig. 11 is a partial schematic longitudinal sectional view of a motor unit illustrating the fourth embodiment of the motor unit according to the present invention. The figure illustrates the configuration of the motor unit 3E with a portion thereof omitted. The figure illustrates the rotary shaft 7 in a non-sectional view. Fig. 12 is an enlarged partial schematic longitudinal sectional view of the motor unit 3E illustrated in Fig. 11.

The motor unit 3E includes the housing 5, the motor chamber 6, the rotary shaft 7, the magnet unit 8 (the magnets 81 to 88), a pair of annular members 9E and 10E, the sleeve 11, the resin material 12, the stator 13, bearings 14 and 15, and filaments 17. The large diameter portion 71, the magnet unit 8, the pair of annular members 9E and 10E, the sleeve 11, the resin material 12, and the filaments 17 constitute the rotor RE in the present modification example. That is, the motor unit 3E includes the rotor RE. In the present modification example, the pump device 1 includes the motor unit 3E instead of the motor unit 3.

The annular member 9E includes a stepped portion 93 for the filaments 17 to be disposed. The stepped portion 93 is formed by cutting a rear portion of the outer circumferential surface 9c of the annular member 9E into a ring shape. The stepped portion 93 is covered with the sleeve 11 and the resin material 12.

The annular member 10E includes a stepped portion 103 for the filaments 17 to be disposed. The stepped portion 103 is formed by cutting a front portion of the outer circumferential surface 10c of the annular member 10E into a ring shape. The stepped portion 103 is covered with the sleeve 11 and the resin material 12.

The filaments 17 are wound around the magnets 81 to 88 and the annular members 9E and 10E in such a way as to cover the outer circumferential surface of the magnet unit 8 and the stepped portions 93 and 103. The filaments 17 are, for example, carbon yarns having high tensile strength.

The resin material 12 is filled into the gaps between the filaments 17, into the gap between each of the magnets 81 to 88 and the filaments 17, into the gaps between the annular members 9E and 10E and the filaments 17, and into the gaps between the sleeve 11 and the filaments 17 in addition to the gaps described in the first embodiment. In other words, the resin material 12 is filled into the gaps between the filaments 17 in such a way as to surround (include) the wound filaments 17. As a result, the wound filaments 17 constitutes, together with the resin material 12, a resin layer in which the altitude is reinforced by the filaments 17, i.e., a carbon fiber reinforced plastics (CFRP) layer. The cured resin material 12 and the filaments 17 cover the outer circumferential surface of the magnet unit 8 and the stepped portions 93 and 103. Thus, the strength of the rotor RE is higher than the strength of the rotor R in the first embodiment.

### Manufacturing Process of Motor Unit (4)

Next, a manufacturing process (manufacturing method) of the motor unit 3E will be described below. In the following description, Figs. 6, 11, and 12 will be referred to as appropriate.

The main manufacturing processes (manufacturing method) of the motor unit 3E include an annular body mounting step, a winding step, a sleeve mounting step, a resin material filling step, a magnetizing step, an incorporating step, and a processing step.

First, the annular body mounting step is performed. Then, the filaments 17 are wound around the stepped portions 93 and 103 of the pair of annular members 9E and 10E and the outer circumferential surfaces 81c to 88c of the magnetic bodies 81 to 88 (the winding step). The winding of the filaments 17 is performed by a known filament winding method, for example.

Then, the sleeve mounting step, the resin material filling step, the magnetizing step, the incorporating step, and the processing step are performed.

As described above, in the resin material filling step, the resin material is filled into the gaps between the filaments 17, into the gaps between each of the magnets 81 to 88 and the filaments 17, into the gaps between the annular members 9E and 10E and the filaments 17, and into the gap between the sleeve 11 and the filaments 17 in addition to the gaps described in the first embodiment.

In the motor unit 3E manufactured by the manufacturing method described above, each of the magnets 81 to 88 is more firmly protected by the CFRP layer than that in the motor unit 3 according to the first embodiment, and thus the detachment of each of the magnets 81 to 88 is even unlikely to occur. As described later, the thickness of the sleeve 11 is reduced, or the sleeve 11 is not required, and thus the rotor diameter can be further reduced. Thus, energy loss (fluid loss) in the motor chamber 6 is reduced, and the rotor RE is capable of withstanding high-speed rotation. Accordingly, the rotor RE having the SPM structure suitable for high-speed rotation is achieved.

Similarly, the dimensional tolerance required for each of the magnetic bodies (the magnets) 81 to 88 is more relaxed than the dimensional tolerance required for the conventional magnet. Accordingly, the assembly of the rotor RC is easier than the assembly of the conventional rotor.

The resin material 12 is filled into the gaps between the adjacent magnets 81 to 88. Thus, the distorting force (i.e., the stress) due to the thermal expansion/thermal contraction is relaxed (absorbed) by the resin material 12.

### Conclusion (4)

According to the fourth embodiment described above, the same effect as that of the motor unit 3 of the first embodiment is obtained in the motor unit 3E.

According to the fourth embodiment described above, the rotor RE includes the filaments 17 wound around the plurality of magnets 81 to 88 in such a way as to cover the outer circumferential surfaces 81c to 88c of the plurality of magnets 81 to 88. The resin material 12 is filled into the gaps between each of the magnets 81 to 88 and the wound filaments 17. According to this configuration, the outer circumferential surfaces 81c to 88c of the magnets 81 to 88 and the stepped portions 93 and 103 are covered with the CFRP layer. Thus, the strength of the rotor RE is higher than the strength of the rotor R in the first embodiment. Each of the magnets 81 to 88 is protected by the CFRP layer, and thus the necessity for the sleeve 11 is reduced compared with the first embodiment. Thus, the thickness of the sleeve 11 can be further reduced, and a configuration in which the rotor RE does not include the sleeve 11 is also acceptable (i.e., the sleeve 11 is not required).

Note that, in the fourth embodiment, the manufacturing process of the motor unit 3E may further include a resin material cutting step in which the outer circumferential surface of the portion of the resin material 12 that constitutes the CFRP layer is cut into a cylindrical shape. In this case, the resin material filling step is performed after the winding step, the resin material cutting step is performed after the winding step, and the sleeve mounting step is performed after the winding step. The resin material filling step is performed again after the sleeve mounting step. When the manufacturing process of the motor unit 3E includes the resin material cutting step, the rotor RE may be press-fitted into the sleeve 11. In this case, the second resin material filling step is not required.

In the fourth embodiment, when the strength of the rotor RE is sufficiently ensured by winding the filaments 17, the motor unit 3E need not include the sleeve 11. In this case, after the resin material filling step, the outer circumferential surface of the portion of the resin component 12 that constitutes the CFRP layer is cut to conform to the outer circumferential surfaces 9c and 10c of the annular members 9E and 10E.

### Other Embodiments

Note that, in the present invention, the pumped liquid used in the pump device 1 may be cryogenic liquid hydrogen or a high-temperature liquid. The entire magnet unit 8 is covered (protected) by the resin material 12, and thus the magnet unit 8 is not exposed to the outside. Thus, the magnet unit 8 does not come into contact with the pumped liquid in the motor chamber 6 filled with the pumped liquid. As a result, the magnet unit 8 is not damaged (i.e., is not influenced) by the pumped liquid.

In the present invention, the core portion need not be constituted by the large diameter portion 71. That is, for example, the core portion may be constituted as a separate body from the rotary shaft 7. In this case, in the axial direction, the rotary shaft 7 may be constituted by a cylindrical shaft portion having a uniform diameter, and the core portion may be constituted by a cylindrical iron core through which the rotary shaft 7 extends. That is, each of the rotors R to RE may include the core portion.

In the present invention, the large diameter portion 71 may include groove portions instead of, or in combination with, the annular members 9, 10, 9E, and 10E. In this case, the groove portions included in the large diameter portion 71 are disposed on the outer circumferential surface 71a of the large diameter portion 71 and are formed so as to allow communication between the front side and the rear side of the annular members 9, 10, 9E, and 10E.

In the present invention, the large diameter portion 71 need not be press-fitted into the annular members 9, 10, 9E, and 10E. That is, for example, the inner diameter of each of the annular members 9, 10, 9E, and 10E may be configured to be larger than the outer diameter of the large diameter portion 71, and the large diameter portion 71 may be loosely fitted to the annular members 9, 10, 9E, and 10E in a clearance-fit state. In this case, the resin material 12 can penetrate into the interior of the rotors R to RE through the gaps defined between the annular members 9, 10, 9E, and 10E and the large diameter portion 71, and thus the groove portions 91 and 101 of the annular members 9, 10, 9E, and 10E are not required.

In the present invention, the groove portions 91 may communicate with the front side (one direction side) and the rear side (the other direction side) of the annular member 9 and need not be disposed along the axial direction. The shape of the groove portion 91 is not limited to the substantially semicircular shape when viewed in the axial direction.

In the present invention, the housing 5 need not include the liquid introduction ports 51 and 52. In this case, the pumped liquid may be introduced into the pump chamber 22 and the motor chamber 6 by passing through the bearings 14 and 15, for example.

In the present invention, each of the magnets 81 to 88 has a seamless annular shape. Thus, the detachment of each of the magnets 81 to 88 due to the centrifugal force accompanying the rotation of the rotary shaft 7 is unlikely to occur, and scattering of the magnets 81 to 88 is also unlikely to occur. Thus, the motor units 3 to 3B need not include the sleeve 11.

The configurations of the embodiments can be combined with each other as long as the present invention is achieved. That is, for example, the rotors RA and RB may include the filaments 17. For example, the rotor RB may include the resin material 89.

### Aspects of the Present Invention

Next, aspects of the present invention conceived from the embodiments described above will be described below with reference to the terms and reference signs described in the embodiments.

A first aspect of the present invention is a rotating electric machine (e.g., motor units 3 to 3E) including a rotor (e.g., rotors R to RE) and a rotary shaft (e.g., rotary shaft 7) to which rotation of the rotor is transmitted, in which the rotor or the rotary shaft includes a core portion (e.g., large diameter portion 71) having a solid cylindrical outer circumferential surface (e.g., outer circumferential surface 71a), the rotor includes a plurality of magnets (e.g., magnets 81 to 88) fixed to the core portion and a first resin material (e.g., resin material 12) that fixes the plurality of magnets to the core portion, in which each of the plurality of magnets has a seamless annular shape, each of the plurality of magnets is disposed outside the core portion in a radial direction of the core portion and is disposed along an axial direction of the core portion, and the first resin material is filled into gaps between the core portion and the plurality of magnets. According to this configuration, the detachment and the scattering of each of the plurality of magnets due to the centrifugal force accompanying the rotation of the rotor are unlikely to occur. According to this configuration, energy loss (fluid loss) caused by resistance (friction) of the pumped liquid in contact with the rotor in the motor chamber is reduced, and the rotor suitable for high-speed rotation is achieved.

A second aspect of the present invention is the rotating electric machine in the first aspect in which the first resin material is filled into gaps between the adjacent magnets. According to this configuration, the distorting force (i.e., the stress) due to the thermal expansion/thermal contraction generated in each magnet and the large diameter portion is relaxed.

A third aspect of the present invention is the rotating electric machine (e.g., motor units 3A and 3B) in the second aspect in which the rotor includes a second resin material (e.g., resin material 89, spacers 161 to 169) disposed between the adjacent magnets, and the second resin material abuts the first resin material. According to this configuration, the distorting force (i.e., the stress) due to thermal expansion/thermal contraction is relaxed (absorbed) by the two resin materials in the axial direction.

A fourth aspect of the present invention is the rotating electric machine (e.g., motor unit 3A) in the third aspect, in which, in the axial direction, each of the magnets includes a first surface (e.g., front surfaces 81a to 88a) that faces one side and a second surface (e.g., 81b to 88b) that faces the other side, and the second resin material (e.g., resin material 89) is mounted on the first surface and the second surface of each of the magnets. According to this configuration, the position and the amount of the resin material filled into the gaps between the adjacent magnets can also be adjusted as desired.

A fifth aspect of the present invention is the rotating electric machine (e.g., motor unit 3B) in the third aspect, in which the second resin material is constituted by a spacer (e.g., spacers 161 to 169) disposed between the adjacent magnets. According to this configuration, a gap equivalent to the thickness of each of the spacers can be reliably defined between the adjacent magnets.

A sixth aspect of the present invention is the rotating electric machine in the third aspect, in which the thickness of the second resin material is constituted in such a way as to increase from a central portion of the core portion toward an end portion of the core portion in the axial direction. According to this configuration, the distorting force (i.e., the stress) due to thermal expansion/thermal contraction is further relaxed (absorbed) in the axial direction.

A seventh aspect of the present invention is the rotating electric machine in the first aspect, in which the rotor includes a pair of annular members (e.g., annular members 9 and 10, 9E and 10E) mounted on the core portion, the pair of annular members is disposed in such a way as to sandwich the plurality of magnets in the axial direction, the pair of annular members is disposed outside the core portion in the radial direction, and at least one of the pair of annular members includes a processed region (e.g., processed region 92) that is processed to adjust rotational balance of the rotary shaft. According to this configuration, the rotational balance of the rotary shaft can be easily adjusted.

An eighth aspect of the present invention is the rotating electric machine in the seventh aspect, in which the outer circumferential surface of the core portion abuts an inner circumferential surface (e.g., inner circumferential surfaces 9d, the 10d) of each of the pair of the annular members, each of the pair of annular members and/or the core portion includes a groove portion (e.g., groove portions 91 and 101) disposed on the inner circumferential surface and/or the outer circumferential surface, and the groove portion communicates with one side (e.g., front side) and the other side (e.g., rear side) of the annular member. According to this configuration, even though the core portion is press-fitted into each of the pair of annular members, the resin material can be filled (impregnated) into the rotor from the groove.

A ninth aspect of the present invention is the rotating electric machine in the eighth aspect, in which the first resin material is filled into the groove portion. According to this configuration, the pumped liquid does not penetrate into the interior of the rotor through the groove portion.

A tenth aspect of the present invention is the rotating electric machine (e.g., motor unit 3E) in the first aspect, in which the rotor (e.g., rotor RE) includes filaments (e.g., filaments 17) wound around the plurality of magnets in such a way as to cover the outer circumferential surfaces of the plurality of magnets, and the first resin material is filled into gaps between the plurality of magnets and the wound filaments. According to this configuration, a CFRP layer is constituted by the filaments. Thus, the strength of the rotor is further increased.

An eleventh aspect of the present invention is the rotating electric machine in the first aspect, in which a portion of the rotary shaft (e.g., large diameter portion 71) functions as the core portion in the axial direction. According to this configuration, the outer diameter of the core portion can be reduced close to the outer diameter of the rotary shaft. As a result, the rotor diameter can be further reduced.

A twelfth aspect of the present invention is the rotating electric machine in any one of the first to eleventh aspects, in which the rotor includes a hollow cylindrical sleeve (e.g., sleeve 11) disposed in such a way as to cover the plurality of magnets in the circumferential direction, and the first resin material is filled into gaps between the plurality of magnets and the sleeve. According to this configuration, the plurality of magnets is covered with and protected by the resin material, and the surface of the magnet unit is also protected by the sleeve.

A thirteenth aspect of the present invention is the rotating electric machine in the twelfth aspect, in which, in the axial direction, one end portion (e.g., front end portion 11a) of the sleeve covers a portion (e.g., rear half portion) of one annular member (e.g., annular member 9) of the pair of annular members, and, in the axial direction, the other end portion (e.g., rear end portion 11b) of the sleeve covers a portion (e.g., front half portion) of the other annular member (e.g., annular member 10) of the pair of annular members. According to this configuration, a portion of the pair of annular members not covered by the sleeve (a front half portion) may be a region that can be processed by cutting (a processed region).

A fourteenth aspect of the present invention is a pump device (e.g., pump device 1) including the rotating electric machine according to the first aspect and an impeller (e.g., impeller 4) configured to rotate by rotation of the rotating electric machine. According to this configuration, the pump device including the rotor having the SPM structure suitable for high-speed rotation is achieved.

### [Reference signs List]

1 Pump device
3 Motor unit (Rotating electric machine)
3A Motor unit (Rotating electric machine)
3B Motor unit (Rotating electric machine)
3E Motor unit (Rotating electric machine)
7 Rotary shaft
71 Large diameter portion (Core portion)
71a Outer circumferential surface
8 Magnet unit
8A Magnet unit
81 to 88 Magnet (Magnetic body)
89 Resin material (Second resin material)
9, 10 Annular member
9E, 10E Annular member
9d, 10d Inner circumferential surface
91, 101 Groove portion (Groove)
92 Processed region
11 Sleeve
11a Front end portion (One end portion)
11b Rear end portion (Other end portion)
12 Resin material (First resin material)
16 Spacer unit
161 to 169 Plurality of spacers (Second resin material)
17 Filament

## Claims

1. A rotating electric machine comprising:
a rotor; and
a rotary shaft to which rotation of the rotor is transmitted, wherein
the rotor or the rotary shaft includes a core portion having a solid cylindrical outer circumferential surface,
the rotor includes
a plurality of magnets fixed to the core portion, and
a first resin material configured to fix the plurality of magnets to the core portion, wherein
each of the plurality of magnets has a seamless annular shape,
each of the plurality of magnets is disposed outside the core portion in a radial direction of the core portion and is disposed along an axial direction of the core portion, and
the first resin material is filled into gaps between the core portion and the plurality of magnets.

2. The rotating electric machine according to claim 1, wherein the first resin material is filled into gaps between the adjacent magnets.

3. The rotating electric machine according to claim 2, wherein
the rotor includes a second resin material disposed between the adjacent magnets, and
the second resin material abuts the first resin material.

4. The rotating electric machine according to claim 3, wherein,
in the axial direction, each of the magnets includes
a first surface that faces one side, and
a second surface that faces the other side, and
the second resin material is mounted on the first surface and the second surface of each of the magnets.

5. The rotating electric machine according to claim 3, wherein the second resin material is constituted by a spacer disposed between the adjacent magnets.

6. The rotating electric machine according to claim 3, wherein the thickness of the second resin material is constituted in such a way as to increase from a central portion of the core portion toward an end portion of the core portion in the axial direction.

7. The rotating electric machine according to claim 1, wherein
the rotor includes a pair of annular members mounted on the core portion,
the pair of annular members is disposed in such a way as to sandwich the plurality of magnets in the axial direction,
the pair of annular members is disposed outside the core portion in the radial direction, and
at least one of the pair of annular members includes a processed region that is processed to adjust rotational balance of the rotary shaft.

8. The rotating electric machine according to claim 7, wherein
the outer circumferential surface of the core portion abuts an inner circumferential surface of each of the pair of the annular members,
each of the pair of annular members and/or the core portion includes a groove portion disposed on the inner circumferential surface and/or the outer circumferential surface,
the groove portion is configured to communicate with one side and the other side of the annular member in the axial direction, and
the first resin material is filled into the groove portion.

9. The rotating electric machine according to claim 1, wherein
the rotor includes filaments wound around the plurality of magnets in such a way as to cover the outer circumferential surfaces of the plurality of magnets, and
the first resin material is filled into gaps between the plurality of magnets and the wound filaments.

10. The rotating electric machine according to claim 1, wherein a portion of the rotary shaft is configured to function as the core portion in the axial direction.

11. The rotating electric machine according to any one of claims 1 to 10, wherein
the rotor includes a hollow cylindrical sleeve disposed in such a way as to cover the plurality of magnets in the circumferential direction, and
the first resin material is filled into gaps between the plurality of magnets and the sleeve.

12. The rotating electric machine according to claim 7, wherein
the rotor includes a hollow cylindrical sleeve disposed in such a way as to cover the plurality of magnets in the circumferential direction of the rotary shaft,
the first resin material is filled into gaps between the plurality of magnets and the sleeve,
one end portion of the sleeve covers a portion of one annular member of the pair of annular members in the axial direction, and
the other end portion of the sleeve covers a portion of the other annular member of the pair of annular members in the axial direction.

13. A pump device comprising:
the rotating electric machine according to claim 1; and
an impeller configured to rotate by rotation of the rotating electric machine.
